# EUROPEAN PATENT APPLICATION

(11) **EP 4 239 491 A1**
(43) Date of publication of application: **06.09.2023**
(21) Application number: 21885378.6
(22) Date of filing: 02.11.2021
(51) Int. Cl.: G06F 16/22, G06N 3/04, G06N 20/00

(54) **METHOD AND SYSTEM FOR PROCESSING DATA TABLES AND AUTOMATICALLY TRAINING MACHINE LEARNING MODEL**

(30) Priority: 02.11.2020 CN 202011205070
(71) Applicant: The Fourth Paradigm (Beijing) Tech Co Ltd, Beijing 100085 (CN)
(72) Inventor: WANG, Hai, Beijing 100085 (CN); JIAO, Yingxiang, Beijing 100085 (CN); LI, Wenhao, Beijing 100085 (CN); TU, Weiwei, Beijing 100085 (CN)
(74) Representative: Müller Hoffmann & Partner
(86) International application number: PCT/CN2021/128150
(87) International publication number: WO 2022/089652

(57) **Abstract**

Provided are a method and system for processing data tables and automatically training a machine learning model. The method for processing data tables includes: acquiring table relationship configuration information about a plurality of data tables, wherein the table relationship configuration information includes an association relationship between every two data tables; combining the plurality of data tables into a basic sample table on the basis of the table relationship configuration information; and generating, on the basis of fields in the basic sample table, derived features about the fields, and incorporating the generated derived features into the basic sample table to form a sample table including a plurality of machine learning samples.

## Description

The present application claims priority to Chinese Patent Application No. 202011205070.2, entitled "METHOD AND SYSTEM FOR PROCESSING DATA TABLES AND AUTOMATICALLY TRAINING MECHINE LEARNING MODEL" filed on November 20, 2020, the disclosure of which is incorporated by reference in its entirety.

### TECHNICAL FIELD

The present disclosure generally relates to a field of data processing and, more specifically, to a method and system for processing a data table and a method and system of automatically training a machine learning model.

### BACKGROUND

In real business environments such as online advertising, a recommendation system, financial market analysis, and medical treatment, data comes from a wide range of sources and is often stored in different data tables. At the same time, data such as a user behavior or a commodity transaction volume changes over time, so there is a large amount of temporal relational data.

In machine learning applications, a scientist with extensive modeling experience is required to build valuable features to improve effects of machine learning models based on multiple associated data tables by trial and error.

### SUMMARY

The exemplary embodiments of the present application aim to provide a method and system for processing a data table to solve the problem in the prior art that multiple data tables cannot be processed conveniently and efficiently to obtain machine learning samples. In addition, the exemplary embodiments of the present application further provide a method and system for automatically training a machine learning model to solve the problem in the prior art that machine learning cannot be automatically performed effectively from data stitching.

According to a first aspect of the present disclosure, there is provided a system including at least one computing device and at least one storage device storing instructions, wherein the instructions, when run by the at least one computing device, cause the at least one computing device to perform steps of a method for processing a data table, including: acquiring table relationship configuration information about a plurality of data tables, wherein the table relationship configuration information includes an association relationship between every two data tables; stitching the plurality of data tables into a basic sample table based on the table relationship configuration information; generating a derived feature about a field in the basic sample table based on the field, and incorporating the generated derived feature into the basic sample table to form a sample table including a plurality of machine learning samples.

According to a second aspect of the present disclosure, there is provided a method for processing a data table, including: acquiring table relationship configuration information about a plurality of data tables, wherein the table relationship configuration information includes an association relationship between every two data tables; stitching the plurality of data tables into a basic sample table based on the table relationship configuration information; generating a derived feature about a field in the basic sample table based on the field, and incorporating the generated derived feature into the basic sample table to form a sample table including a plurality of machine learning samples.

According to a third aspect of the present disclosure, there is provided a method of automatically training a machine learning model, including: obtaining a sample table including a plurality of machine learning samples by performing steps of a method as described above; training machine learning models using different machine learning algorithms and different hyperparameters, respectively, based on the sample table; determining a machine learning model with the best effect from the trained machine learning models, as a final trained machine learning model.

According to a fourth aspect of the present disclosure, there is provided a system for processing a data table, including: a configuration information acquisition device adapted to acquire table relationship configuration information about a plurality of data tables, wherein the table relationship configuration information includes an association relationship between every two data tables; a stitching device adapted to stitch the plurality of data tables into a basic sample table based on the table relationship configuration information; a sample table generation device adapted to generate a derived feature about a field in the basic sample table based on the field, and incorporate the generated derived feature into the basic sample table to form a sample table including a plurality of machine learning samples.

According to a fifth aspect of the present disclosure, there is provided a system of automatically training a machine learning model, including: a system for processing a data table as described above; a training device adapted to train machine learning models using different machine learning algorithms and different hyperparameters, respectively, based on a sample table including a plurality of machine learning samples obtained by the system for processing a data table; a determining device adapted to determine a machine learning model with the best effect from the trained machine learning models, as a final trained machine learning model

According to a sixth aspect of the present disclosure, there is provided a computer readable storage medium storing instructions, wherein the instructions, when executed by at least one computing device, cause the at least one computing device to perform a method for processing a data table as described above or a method of automatically training a machine learning model as described above.

According to a seventh aspect of the present disclosure, there is provided an electronic apparatus, including: at least one processor; at least one memory storing computer executable instructions; wherein the computer executable instructions, when executed by at least one processor, cause the at least one processor to perform a method for processing a data table as described above or a method of automatically training a machine learning model as described above.

The methods and systems for processing a data table according to the exemplary embodiments of the present disclosure provide a convenient and effective way of processing a data table, which not only improves processing efficiency and reduces the threshold of using feature engineering, but also facilitates extracting effective features to form machine learning samples to improve effects of a machine learning model.

Moreover, the method and system for automatically training a machine learning model according to the exemplary embodiments of the present disclosure may automatically train a machine learning model that meets requirements, greatly reducing the threshold of machine learning, and further improve effects of the trained corresponding machine learning model due to the obtained machine learning samples including effective feature information.

Additional aspects and/or advantages of the general idea of the present disclosure will be described in part in the description that follows, and a further part will be clear by the description or may be known by the implementation of the general idea of the present disclosure.

### BRIEF DESCRIPTION OF DRAWINGS

The foregoing and other objects and features of the exemplary embodiments of the present disclosure will become clearer by the following description in connection with the accompanying drawings illustrating the exemplary embodiments, wherein:
FIG. 1 illustrates a flowchart of a method for processing a data table according to an exemplary embodiment of the present disclosure.
FIG. 2 illustrates a flowchart of a method for stitching a plurality of data tables into a basic sample table according to an exemplary embodiment of the present disclosure.
FIG. 3 illustrates a flowchart of a method for generating a derived feature and incorporating the generated derived feature into a basic sample table according to an exemplary embodiment of the present disclosure.
FIG. 4 illustrates a flowchart of a method for automatically training a machine learning model according to an exemplary embodiment of the present disclosure.
FIG. 5 illustrates a block diagram of a system for processing a data table according to an exemplary embodiment of the present disclosure.
FIG. 6 illustrates a block diagram of a stitching device according to an exemplary embodiment of the present disclosure.
FIG. 7 illustrates a block diagram of a system for automatically training a machine learning model according to an exemplary embodiment of the present disclosure.

### DETAILED DESCRIPTION

Reference will now be made in detail to the embodiments of the present disclosure, the examples of the embodiments are illustrated in the accompanying drawings, wherein the same labels always refer to the same parts. The embodiments will be illustrated hereinafter with reference to the accompanying drawings in order to explain the present disclosure.

It is noted herein that "at least one of several items" in the present disclosure means that these three parallel situations of "any one of the several items", "any combination of the several items", and "all of the several items" are included. "And/or" in the present disclosure means at least one of two or more items connected by it. For example, "including at least one of A and B", "including A and/or B" include the following three parallel situations: (1) including A; (2) including B; (3) including A and B. For another example, "executing at least one of Step 1 and Step 2", "executing Step 1 and/or Step 2" mean the following three parallel situations: (1) executing Step 1; (2) executing Step 2; (3) executing Step 1 and Step 2. That is, "A and/or B" may also be expressed as "at least one of A and B", "executing Step 1 and/or Step 2" may also be expressed as "executing at least one of Step 1 and Step 2".

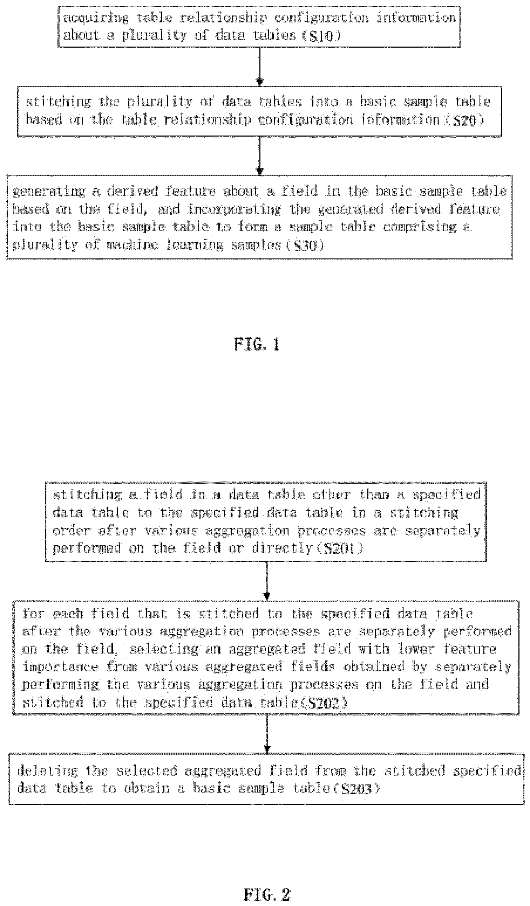

FIG. 1 illustrates a flowchart of a method for processing a data table according to an exemplary embodiment of the present disclosure. Here, as an example, the method may be executed by a computer program or by a hardware device or a combination of hardware and software resources dedicated to perform machine learning, big data computing, or data analysis, etc. For example, the method may be executed by data warehouse software for performing data storage and management, a machine learning platform for implementing machine learning-related business, etc.

Referring to FIG. 1, at step S10, table relationship configuration information about a plurality of data tables is acquired.

The table relationship configuration information includes an association relationship between every two data tables, for example, a data table A has an association relationship with a data table B. Further, as an example, the table relationship configuration information may further include at least one of an association field on which the association relationship between every two data tables is based, a specific type of the association relationship between every two data tables, a maximum number of stitches, a type and a stitching end point of at least one data table of the plurality of data tables. It should be understood that the table relationship configuration information may also include other appropriate information for configuring stitching method of the plurality of data tables, and the present disclosure does not limit this.

As an example, the table relationship configuration information about the plurality of data tables may be obtained based on an input operation performed by a user in a screen. As an example, the input operation may include an input operation for specifying an association relationship between every two data tables. Further, by way of example, the input operation may further include at least one of an input operation for specifying a type of the association relationship between every two data tables, an input operation for specifying an association field on which the association relationship between every two data tables is based, an input operation for specifying a type of at least one data table of the plurality of data tables, an input operation for specifying an allowed maximum number of stitches, an input operation for specifying a data table as a stitching end point.

Here, each piece of data record in the data table may be regarded as a description about an event or object, corresponding to an example or sample. The data record includes attribute information that reflects a performance or property of the event or object in some aspects, i.e. a field. For example, a row of a data table corresponds to a piece of data record, and a column of the data table corresponds to a field. In two data tables having an association relationship based on an association field, a meaning of a corresponding association field in one data table is the same as a meaning of the corresponding association field in the other data table, thereby enabling the data records in the two data tables to be corresponded to each other for stitching based on the two association fields. For example, the data records with the same field values of these two association fields in these two data tables may be stitched together during stitching. It should be understood that the field names of the two association fields may be the same or different. For example, an association field may be an "ID" field and its corresponding association field may be a "UserID" field, both of which have different field names but describe substantially the same business information and are used to describe the user's ID number. For example, in two data tables having an association relationship based on an association field, a corresponding association field in one data table may be a primary key of the data table, and the corresponding association field in the other data table may be a foreign key of the primary key.

As an example, the type of the association relationship between every two data tables may include: one-to-one, one-to-many, many-to-one, and many-to-many. Specifically, a data table A and a data table B have an association relationship based on an association field C, if the same field value of the association field C in the data table A may appear in only one piece of data record, and the same field value of the association field C in the data table B may appear in only one piece of data record, the type of the association relationship between the data table A and the data table B is: one-to-one; if the same field value of the association field C in the data table A may appear in only one piece of data record, and the same field value of the association field C in the data table B may appear in a plurality of pieces of data records, the type of the association relationship between the data table A and the data table B is: one-to-many; if the same field value of the association field C in the data table A may appear in a plurality of pieces of data records, and the same field value of the association field C in the data table B value may appear in only one piece of data record, the type of the association relationship between the data table A and the data table B is: many-to-one; if the same field value of the association field C in the data table A may appear in a plurality of pieces of data records, and the same field value of the association field C in the data table B may appear in a plurality of pieces of data records, the type of the association relationship between the data table A and the data table B is: many-to-many.

As an example, the type of the data table may include, but not limited to, at least one of a static table, a temporal table, a sliced table. It should be understood that the type of the data table may also include other appropriate types, and the present disclosure does not limit this.

At step S20, the plurality of data tables are stitched into a basic sample table based on the table relationship configuration information.

As an example, a field in a data table other than a specified data table is stitched to the specified data table to form the basic sample table in a stitching order that a field in one of two data tables having the association relationship is stitched to the other data table based on an association field until to the specified data table.

Specifically, the stitching order of the plurality of data tables may be determined based on the association relationship between every two data tables among the plurality of data tables, and then, the fields in the data tables other than the specified data table is stitched to the specified data table to form the basic sample table according to the stitching order. For example, if a data table A and a data table B have an association relationship, the data table B and a data table C have an association relationship, the data table C and a data table D have an association relationship, the data table D and a data table E have an association relationship, the data table E and a data table F have an association relationship, and the data table E is the specified data table (i.e., the stitching end point as mentioned previously), the stitching order may be: the data table A → the data table B → the data table C → the data table D → the data table E, and the data table F → the data table E, for example, a stitching path of the data table A is that a field in the data table A needs to be stitched to the data table B, and then from the data table B to the data table C, and then from the data table C to the data table D, and then from the data table D to the data table E, the number of stitches needed is 4 times; a stitching path of the data table B is that a field in the data table B need to be stitched to the data table C, then from the data table C to the data table D, and then from the data table D to the data table E, the number of stitches needed is 3 times; a stitching path of the data table F is that a field in the data table F is stitched to the data table E, the number of stitches needed is 1 time.

In addition, as an example, it may be determined whether there exists, among the plurality of data tables, a data table whose final stitching to the specified data table in the stitching order requires a number of stitches exceeding the maximum number of stitches, when it is determined that the data table exists, fields in data tables other than the specified data table and the determined data table among the plurality of data tables are stitched to the specified data table in the stitching order to form the basic sample table, that is, the data table whose final stitching to the specified data table in the stitching order requires a number of stitches exceeding the maximum number of stitches does not participate in stitching; when it is determined that the data table does not exists, fields in data tables other than the specified data table among the plurality of data tables are stitched to the specified data table in the stitching order to form the basic sample table.

An exemplary embodiment of step S20 will be described later in connection with FIG. 2.

At step S30, a derived feature about a field in the basic sample table is generated based on the field, and the generated derived feature is incorporated into the basic sample table to form a sample table including a plurality of machine learning samples.

As an example, a derived feature may be generated based on at least one field.

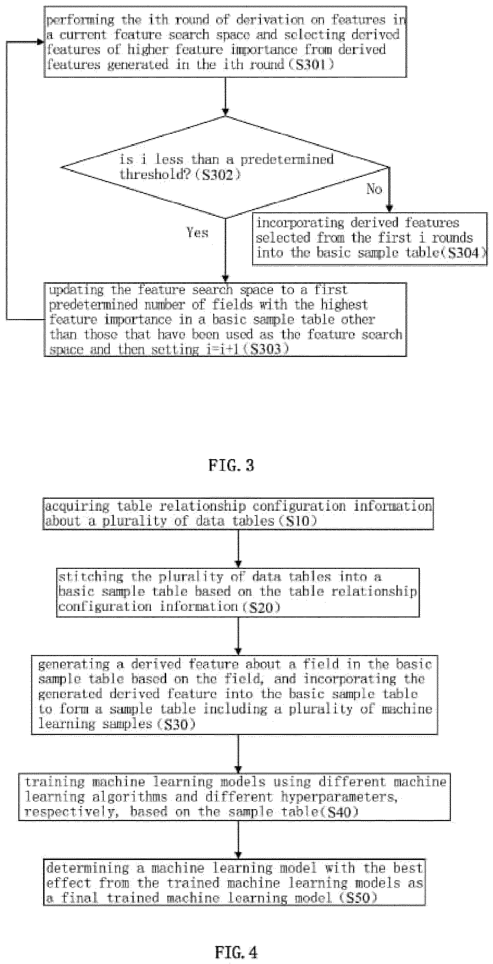

An exemplary embodiment of step S30 will be described later in connection with FIG. 3.

FIG. 2 illustrates a flowchart of a method for stitching a plurality of data tables into a basic sample table according to an exemplary embodiment of the present disclosure.

As shown in FIG. 2, at step S201, the fields in the data tables other than the specified data table are stitched to the specified data table in the stitching order after various aggregation processes are separately performed on the fields, or the fields in the data tables other than the specified data table are directly stitched to the specified data table in the stitching order (i.e., without performing the aggregation processes on the field values).

As an example, when a field in any data table other than the specified data table can be stitched directly from a data table where the field is initially located to the specified data table in the stitching order without the aggregation processes, the field of the data table may be stitched directly from the data table where the field is initially located to the specified data table in the stitching order.

As an example, when a field in any data table other than the specified data table can only be stitched from a data table where the field is initially located to the specified data table in the stitching order after the aggregation processes are performed on the field, in the process of stitching the field from the data table where the field is initially located to the specified data table in the stitching order, whenever the aggregation processes are required to stitch the field of the data table or an aggregated field of the field of the data table to a next data table, various aggregated fields obtained after the various aggregation processes are separately performed on the field of the data table or the aggregated field of the field of the data table may be stitched to the next data table. In addition, when the field of the data table or the aggregated field of the field of the data table may be stitched directly to the next data table without the aggregation processes, the field of the data table or the aggregated field of the field of the data table may be stitched to the next data table. The field in the data table can only be stitched from the data table where the field is initially located to the specified data table in the stitching order after the aggregation processes are performed on the field, which can be understood to mean that the stitching can be continued downwards only if at least one aggregation process is performed during the process of stitching the field in the data table from the data table where the field is initially located to the specified data table in the stitching order.

For example, when it is necessary to stitch a data table (i.e., a data table to be stitched) to another data table (i.e., a stitched data table), if the association relationship between the data table to be stitched and the stitched data table is: one-to-one, or one-to-many, a field of the data table to be stitched may be stitched directly to the stitched data table; if the association relationship between the data table to be stitched and the stitched data table is: many-to-one, or many-to-many, the field of the data table to be stitched is stitched to the stitched data table after various aggregation processes are performed on the field. Here, the field on which the various aggregation processes are separately performed and stitched to the stitched data table is an aggregated field of the field of the data table to be stitched. It should be understood that performing n separate aggregation processes on a field will result in n aggregated fields. For example, a data table 1 needs to be stitched to a data table 2, the data table 2 needs to be stitched to a data table 3, and a field of data table 1 needs to be aggregated before it may be stitched to the data table 2, and a field of the data table 2 needs to be aggregated before it may be stitched to the data table 3. For a field "a" of the data table 1 other than an association field with the data table 2, n aggregation processes may be separately performed on the field "a", and n aggregated fields of the field "a" are stitched into the data table 2. When the data table 2 is stitched into the data table 3, n aggregation processes may be separately performed on the n aggregated fields of the field "a", and the aggregated result of n*n aggregated fields are stitched into the data table 3. As an example, when the type of the data table to be stitched is a slice table, the data table to be stitched may be stitched to the stitched data table in a last-join manner.

As an example, the various aggregation processes may include various temporal aggregation processes based on various time windows and/or various non-temporal aggregation processes. By way of example, the table relationship configuration information may further include at least one of: types of the various temporal aggregation processes, types of the various non-temporal aggregation processes, sizes of the various time windows. By way of example, the types of the various temporal aggregation processes, the types of the various non-temporal aggregation processes, and the sizes of the various time windows may be specified by the user. It should be understood that the same temporal aggregation process in different time windows also belongs to a different aggregation process; the same aggregation process based on different aggregation base fields also belongs to a different aggregation process.

As an example, the aggregation processes may be performed on a field based on the type of the field. As an example, the type of each field in the data table may be specified by the user. As an example, the type of the field in the data table may be set according to an input operation performed by the user in a graphical interface for setting the type of the field in the data table displayed in a screen.

As an example, the type of the field may include, but not limited to, at least one of: singlestring (single string type), arraystring (array string type), kvstring (Key-value string type), continuenum (continuous value type), time (timestamp type).

As an example, the types of the temporal aggregation processes may include, but not limited to, at least one of: summing, averaging, taking a maximum value, taking a minimum value, calculating a number of different field values, calculating a number of field values, calculating a variance, calculating mean square error, taking a predetermined number of field values with the highest frequency, taking a last field value, and taking a last non-null field value.

As an example, the types of the non-temporal aggregation processes may include, but not limited to, at least one of: summing, averaging, taking a maximum value, taking a minimum value, calculating the number of different field values, calculating the number of field values, taking a variance, taking an average variance, taking a predetermined number of field values with the highest frequency.

In addition, as an example, for each field other than an association field with a data table to which the field is to be stitched in each data table other than the specified data table, a stitch path for stitching the field to the specified data table in the stitching order after the various aggregation processes are separately performed on the field or directly is generated; for the each field, the field is stitched to the specified data table according to the stitching path of the field after the various aggregation processes are separately performed on the field or directly. Thereby, an underlying computing engine may process and stitch a field in each data table other than the specified data table to the specified data table according to the stitching path.

At step S202, for each field that is stitched to the specified data table after the various aggregation processes are separately performed on the field, an aggregated field with lower feature importance is selected from various aggregated fields obtained by separately performing the various aggregation processes on the field and stitched to the specified data table.

At step S203, the selected aggregated field is deleted from the stitched specified data table to obtain the basic sample table.

In other words, the field obtained without the aggregation processes in the specified data table obtained after completing the stitching is retained directly, and for the fields (i.e., the aggregated fields) obtained by performing the aggregation processes in the specified data table obtained after completing the stitching, only the aggregated field with higher feature importance is retained.

Various appropriate methods may be used to select the aggregated field with lower feature importance. As an example, for each field that is stitched to the specified data table after the various aggregation processes are separately performed on the field, for each of the various aggregated fields obtained by separately performing the various aggregation processes on the field and stitched to the specified data table, a corresponding machine learning model may be trained based on an unaggregated field in the stitched specified data table and the aggregated field; an aggregated field with a bad effect of the corresponding machine learning model may be selected from the various aggregated fields obtained by separately performing the various aggregation processes on the field and stitched to the specified data table, as the aggregated field of lower feature importance.

Since the effects of the corresponding machine learning model can reflect the feature importance (e.g., predictive power) of the candidate aggregated field, each candidate aggregated field may be selected by measuring the effects of the machine learning model corresponding to the candidate aggregated field, e.g., the better are the effects of the corresponding machine learning model, the higher is the feature importance. As an example, a specified model evaluation metric may be used to evaluate the effects of the machine learning model corresponding to each candidate aggregation field. As an example, the model evaluation metric may be AUC (Area Under Receiver Operating Characteristic (ROC) Curve), MAE (Mean Absolute Error), or log loss function (logloss), etc.

As an example, for each field that is stitched to the specified data table after the various aggregation processes are separately performed on the field, a certain number of aggregated fields with the lowest feature importance may be filtered from the various aggregated fields obtained by separately performing the various aggregation processes on the field and stitched to the specified data table, and the number may be determined based on the total number of fields in the data table where the field is initially located.

The way of stitching the plurality of data tables into the basic sample table according to the present disclosure can automatically find the effective feature information of the associated tables to form the basic sample table.

FIG. 3 illustrates a flowchart of a method for generating a derived feature and incorporating the generated derived feature into a basic sample table according to an exemplary embodiment of the present disclosure.

As shown in FIG. 3, at step S301, the ith round of derivation is performed on features in a current feature search space and derived features of higher feature importance are selected from derived features generated in the ith round, wherein an initial value of i is 1.

As an example, the initial value of the feature search space may be a first predetermined number of fields with the highest feature importance in the basic sample table. In addition, other suitable methods may be used to determine the initial value of the feature search space, for example, meta-learning may be used to determine the initial value of the feature search space.

As an example, the step of performing the ith round of derivation on the features in the current feature search space may include: separately performing various nth-order processes on every n features in the current feature search space to generate various nth-order derived features; wherein n takes at least one integer greater than 0; and the nth-order process is a process performed on at least one of n features based on the n features

As an example, the step of performing the ith round of derivation on the features in the current feature search space may include:
generating various first-order derived features by separately performing various first-order processes on each of features in the current feature search space; and/or
generating various second-order derived features by separately performing various second-order processes on every two features in the current feature search space; and/or
generating various third-order derived features by separately performing various third-order processes on every three features in the current feature search space. Thereby, at least one of the generated first-order derived features and/or the second-order derived features and/or the third-order derived features may be used as the derived features for the i-th round of derivation.

As an example, the first-order process may be a process performed on a single feature only; the second-order process may be a process performed on at least one of two features based on the two features; the third-order process may be a process performed on at least one of three features based on the three features.

As an example, a way of the first-order process, a way of the second-order process, and a way of the third-order process may be specified by the user. For example, the first-order process may include: performing discrete processing on continuous features. The second-order process may include: combining and/or aggregating two features, and/or aggregating one feature with another feature as an aggregation reference. For example, the third-order process may include: combining and/or aggregating three features, and/or aggregating two features with another one feature as the aggregation reference, and/or aggregating one feature with another two features as the aggregation reference.

As an example, the step of selecting the derived feature of higher feature importance from the derived features generated in the ith round may include: for each of the derived features generated in the ith round, training a corresponding machine learning model based on the features in the current feature search space and the derived feature; selecting, from the derived features generated in the ith round, derived features for which effects of the corresponding machine learning model satisfy a predetermined condition. For example, the predetermined condition may be that the effect of the machine learning model accounts for a top predetermined percentage of ranking of the effects of the machine learning model corresponding to each derived feature generated in the ith round from highest to lowest.

At step S302, it is determined whether i is less than a predetermined threshold.

At step S303, when i is less than the predetermined threshold, the feature search space is updated to the first predetermined number of fields with the highest feature importance in the basic sample table other than those that have been used as the feature search space, then it sets i=i+1, and returns to perform step S301.

At step S304, when i is greater than or equal to the predetermined threshold, derived features selected from the first i rounds are incorporated into the basic sample table.

As an example, when performing each round of derivation, only part of the data records in the basic sample table may be used, and a suitable number of data records may be selected for each round and the number selected for different rounds may be the same or different, which may be reasonably set according to the computational requirements (considering various aspects such as computational configuration, time required for computation, etc.), and, since the effects of the corresponding machine learning model need to be verified, validation samples are required, the part of the data records in the basic sample table used in each round may be divided into training samples and validation samples according to the time sequence. Finally, the derived features may be generated for all data records in the basic sample table and incorporated into the basic sample table according to the specific form of the derived features selected in the first i rounds.

In addition, as an example, the number of derived features selected in each round may be the same or different; the number of fields in the feature search space used in each round may be the same or different.

According to the exemplary embodiment of the present disclosure, it is possible to further automatically derive valuable feature information based on the fields in the basic sample table to improve the comprehensiveness and validity of the features in the sample table.

According to the exemplary embodiment of the present disclosure, the user only needs to establish an association relationship between any two data tables to obtain a sample table including more comprehensive and valuable feature information that is obtained by stitching a plurality of data tables. This is easy, intuitive, and understandable for the user, thus enabling a user with no experience in feature engineering to construct a sample table that work well for training a machine learning model.

FIG. 4 illustrates a flowchart of a method for automatically training a machine learning model according to an exemplary embodiment of the present disclosure. Here, by way of example, the method may be performed by a computer program, or may be performed by a specialized hardware device or a combination of hardware and software resources for performing machine learning, big data computing, or data analytics, etc., for example, the method may be performed by a machine learning platform for implementing machine learning-related business.

As shown in FIG. 4, at step S10, table relationship configuration information is obtained about a plurality of data tables, wherein the table relationship configuration information includes: an association relationship between every two data tables.

At step S20, the plurality of data tables are stitched into a basic sample table based on the table relationship configuration information.

At step S30, a derived feature about a field in the basic sample table is generated based on the field and the generated derived feature is incorporated into the basic sample table to form a sample table including a plurality of machine learning samples. It should be understood that steps S10 to step S30 may be implemented with reference to the specific implementations described above in connection with FIGS. 1 to 3 and will not be repeated herein.

At step S40, machine learning models using different machine learning algorithms and different hyperparameters are trained respectively based on the sample table.

As an example, suitable algorithms such as random search, grid search, Bayesian optimization, hyperparameter optimization algorithm, etc. may be used to train machine learning models using different machine learning algorithms and different hyperparameters respectively based on the sample table.

At step S50, a machine learning model with the best effect is determined from the trained machine learning models as a final trained machine learning model.

According to the exemplary embodiment of the present disclosure, the user only needs to perform an easy-to-operate, intuitive and easy-to-understand input operation for establishing an association relationship between any two data tables to train a machine learning model that meets the requirements, so that business personnel who do not have professional abilities related to machine learning can also complete the modeling work independently, which greatly reduces the threshold of machine learning and also frees the modeling engineer from learning about the business of the target domain to devote to more specialized production work.

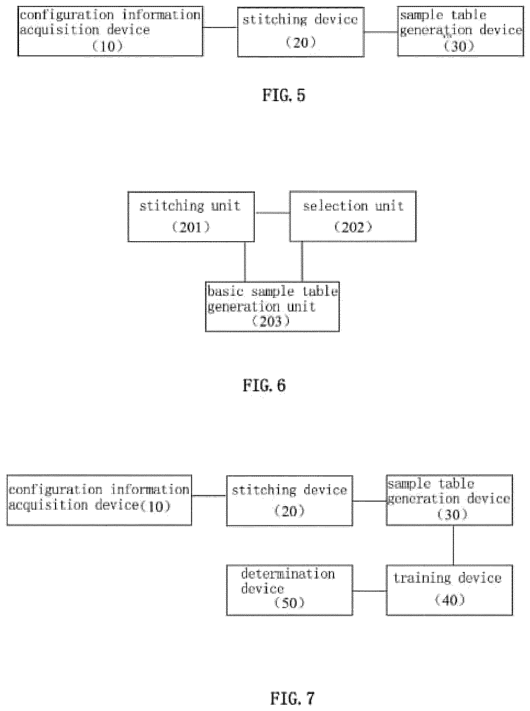

FIG. 5 illustrates a block diagram of a system for processing a data table according to an exemplary embodiment of the present disclosure.

As shown in FIG. 5, the system for processing a data table according to the exemplary embodiment of the present disclosure includes: a configuration information acquisition device 10, a stitching device 20, and a sample table generation device 30.

Specifically, the configuration information acquisition device 10 is adapted to obtain acquire table relationship configuration information about a plurality of data tables, wherein the table relationship configuration information includes an association relationship between every two data tables.

The stitching device 20 is adapted to stitch the plurality of data tables into a basic sample table based on the table relationship configuration information.

The sample table generation device 30 is adapted to generate a derived feature about a field in the basic sample table based on the field, and incorporate the generated derived feature into the basic sample table to form a sample table including a plurality of machine learning samples.

As an example, the stitching device 20 may be adapted to stitch a field in a data table other than a specified data table to the specified data table to form the basic sample table in a stitching order that a field in one of two data tables having the association relationship is stitched to the other data table based on an association field until to the specified data table.

FIG. 6 illustrates a block diagram of a stitching device according to an exemplary embodiment of the present disclosure.

As shown in FIG. 6, the stitching device 20 may include: a stitching unit 201, a selection unit 202, and a basic sample table generation unit 203.

Specifically, the stitching unit 201 is adapted to stitch the field in the data table other than the specified data table to the specified data table in the stitching order after various aggregation processes are separately performed on the field or directly.

For each field that is stitched to the specified data table after the various aggregation processes are separately performed on the field, the selection unit 202 is adapted to select an aggregated field with lower feature importance from various aggregated fields obtained by separately performing the various aggregation processes on the field and stitched to the specified data table.

The basic sample table generation unit 203 is adapted to delete the selected aggregated field from the stitched specified data table to obtain the basic sample table.

As an example, when a field in any data table other than the specified data table can be stitched directly from a data table where the field is initially located to the specified data table in the stitching order without the aggregation processes, the stitching unit 201 may be adapted to stitch the field of the data table directly from the data table where the field is initially located to the specified data table in the stitching order.

As an example, when a field in any data table other than the specified data table can only be stitched from a data table where the field is initially located to the specified data table in the stitching order after the aggregation processes are performed on the field, in the process of stitching the field from the data table where the field is initially located to the specified data table in the stitching order, whenever the aggregation processes are required to stitch the field of the data table or an aggregated field of the field of the data table to a next data table, the stitching unit 201 may be adapted to stitch various aggregated fields obtained after the various aggregation processes are separately performed on the field of the data table or the aggregated field of the field of the data table to the next data table, wherein the various aggregation processes include various temporal aggregation processes based on various time windows and/or various non-temporal aggregation processes.

As an example, for each field other than an association field with a data table to which the field is to be stitched in each data table other than the specified data table, the stitching unit 201 may be adapted to generate a stitch path for stitching the field to the specified data table in the stitching order after the various aggregation processes are separately performed on the field or directly; for the each field, stitch the field to the specified data table according to the stitching path of the field after the various aggregation processes are separately performed on the field or directly.

As an example, for each of the various aggregated fields obtained by separately performing the various aggregation processes on the field and stitched to the specified data table, the selection unit 202 may be adapted to train a corresponding machine learning model based on an unaggregated field in the stitched specified data table and the aggregated field; and select, from the various aggregated fields obtained by separately performing the various aggregation processes on the field and stitched to the specified data table, an aggregated field with a bad effect of the corresponding machine learning model as the aggregated field of lower feature importance.

As an example, the table relationship configuration information further includes: a maximum number of stitches, wherein the stitching device 20 may be adapted to determine whether there exists among the plurality of data tables a data table whose final stitching to the specified data table in the stitching order requires a number of stitches exceeding the maximum number of stitches; wherein, when it is determined that the data table exists, fields in data tables other than the specified data table and the determined data table among the plurality of data tables are stitched to the specified data table in the stitching order to form the basic sample table; when it is determined that the data table does not exists, fields in data tables other than the specified data table among the plurality of data tables are stitched to the specified data table in the stitching order to form the basic sample table.

As an example, the sample table generation device 30 may be adapted to perform the following processes of: (a) performing the ith round of derivation on features in a current feature search space and selecting derived features of higher feature importance from derived features generated in the ith round, wherein an initial value of i is 1 and an initial value of the feature search space is a first predetermined number of fields with the highest feature importance in the basic sample table; (b) when i is less than a predetermined threshold, updating the feature search space to the first predetermined number of fields with the highest feature importance in the basic sample table other than those that have been used as the feature search space, letting i=i+1, and returning to perform step (a); (c) when i is greater than or equal to the predetermined threshold, incorporating derived features selected from the first i rounds into the basic sample table.

As an example, the sample table generation device 30 may be adapted to separately perform various nth-order processes on every n features in the current feature search space to generate various nth-order derived features; wherein n takes at least one integer greater than 0; and the nth-order process is a process performed on at least one of n features based on the n features.

As an example, the sample table generation device 30 may be adapted to perform the following processes of: generating various first-order derived features by separately performing various first-order processes on each of features in the current feature search space; and/or generating various second-order derived feature by separately performing various second-order processes on every two features in the current feature search space; and/or generating various third-order derived feature by separately performing various third-order processes on every three features in the current feature search space, wherein the first-order process is a process performed on a single feature only; the second-order process is a process performed on at least one of two features based on the two features; the third-order process is a process performed on at least one of three features based on the three features.

As an example, for each of the derived features generated in the ith round, the sample table generation device 30 may be adapted to train a corresponding machine learning model based on the features in the current feature search space and the derived feature; and select, from the derived features generated in the ith round, derived features for which effects of the corresponding machine learning model satisfy a predetermined condition.

As an example, the temporal aggregation processing may include at least one of summing, averaging, taking a maximum value, taking a minimum value, calculating a number of different field values, calculating a number of field values, calculating a variance, calculating a mean square error, taking a predetermined number of field values with the highest frequency, taking a last field value, taking a last non-null field value; the non-temporal aggregation processing may include at least one of summing, averaging, taking a maximum value, taking a minimum value, calculating a number of different field values, calculating a number of field values, calculating a variance, calculating mean square error, and taking a predetermined number of field values with the highest frequency.

As an example, the configuration information acquisition device 10 may be adapted to acquire the table relationship configuration information about the plurality of data tables, based on an input operation performed by a user in a screen, wherein the input operation includes an input operation for specifying that every two data tables have the association relationship.

FIG. 7 illustrates a block diagram of a system for automatically training a machine learning model according to an exemplary embodiment of the present disclosure.

As shown in FIG. 7, the system for automatically training a machine learning model according to the exemplary embodiment of the present disclosure includes: a configuration information acquisition device 10, a stitching device 20, a sample table generation device 30, a training device 40, and a determination device 50.

Specifically, the configuration information acquisition device 10 is adapted to obtain table relationship configuration information about a plurality of data tables, wherein the table relationship configuration information includes an association relationship between every two data tables.

The stitching device 20 is adapted to stitch the plurality of data tables into a basic sample table based on the table relationship configuration information.

The sample table generation device 30 is adapted to generate a derived feature about a field in the basic sample table based on the field, and incorporate the generated derived feature into the basic sample table to form a sample table including a plurality of machine learning samples.

The training device 40 is adapted to train machine learning models using different machine learning algorithms and different hyperparameters based on the sample

table including a plurality of machine learning samples obtained by the system for processing a data table.

The determination device 50 is adapted to determine a machine learning model with the best effect from the trained machine learning models, as a final trained machine learning model.

It should be understood that specific implementations of the system for processing a data table and the system for automatically training a machine learning model according to the exemplary embodiments of the present disclosure may be implemented with reference to the relevant specific implementations described in connection with FIGS. 1 to 4 and will not be repeated herein.

The devices included in the system for processing a data table and the system for automatically training a machine learning model according to the exemplary embodiments of the present disclosure may be configured as software, hardware, firmware, or any combination of the above for performing specific functions, respectively. For example, these devices may correspond to dedicated integrated circuits, to pure software code, or to modules that combine software and hardware. In addition, one or more of the functions implemented by these devices may also be uniformly performed by components in a physical entity device (e.g., a processor, a client or a server, etc.).

It should be understood that the method for processing a data table according to the exemplary embodiments of the present disclosure may be implemented by a program recorded on a computing readable medium, for example, a computer readable medium for processing a data table may be provided according to an exemplary embodiment of the present disclosure, wherein a computer program for performing the following method steps is recorded on the computer readable medium: acquiring table relationship configuration information about a plurality of data tables, wherein the table relationship configuration information includes an association relationship between every two data tables; stitching the plurality of data tables into a basic sample table based on the table relationship configuration information; generating a derived feature about a field in the basic sample table based on the field, and incorporating the generated derived feature into the basic sample table to form a sample table including a plurality of machine learning samples.

It should be understood that the method for automatically training a machine learning model according to the exemplary embodiments of the present disclosure may be implemented by a program recorded on a computationally readable medium, for example, a computer readable medium for automatically training a machine learning model according to an exemplary embodiment of the present disclosure may be provided, wherein a computer program for performing the following method steps is recorded on the computer readable medium: acquiring table relationship configuration information about a plurality of data tables, wherein the table relationship configuration information includes an association relationship between every two data tables; stitching the plurality of data tables into a basic sample table based on the table relationship configuration information; generating a derived feature about a field in the basic sample table based on the field, and incorporating the generated derived feature into the basic sample table to form a sample table including a plurality of machine learning samples; training machine learning models using different machine learning algorithms and different hyperparameters, respectively, based on the sample table; determining a machine learning model with the best effect from the trained machine learning models, as a final trained machine learning model.

The computer programs in the above computer readable mediums may run in an environment deployed in a computer device such as a client, host, agent device, server, etc. It should be noted that the computer program may also be used to perform additional steps in addition to the above steps or to perform more specific processing in performing the above steps, and these additional steps and further processing have been described with reference to FIGS. 1 to 4 and will not be repeated herein to avoid repetition.

It should be noted that the system for processing a data table and the system for automatically training a machine learning model according to the exemplary embodiments of the present disclosure may rely entirely on the operation of a computer program to achieve the corresponding functions, i.e., the individual devices correspond to the steps in the functional architecture of the computer program such that the entire system is invoked through a specialized software package (e.g., a lib library) to achieve the corresponding functions.

On the other hand, the individual devices included in the system for processing a data table and the system for automatically training a machine learning model according to the exemplary embodiments of the present disclosure may also be implemented by hardware, software, firmware, middleware, microcode, or any combination thereof. When implemented in software, firmware, middleware, or microcode, program code or code segments for performing the corresponding operations may be stored in a computer-readable medium such as a storage medium such that the processor may perform the corresponding operations by reading and running the corresponding program code or code segments.

For example, the exemplary embodiments of the present disclosure may also be implemented as a computing device that includes a storage component and a processor, wherein a set of computer-executable instructions is stored in the storage component, the set of computer-executable instructions, when executed by the processor, performs the method of processing a data table or the method of automatically training a machine learning model.

Specifically, the computing device may be deployed in a server or client, or may be deployed on a node device in a distributed network environment. In addition, the computing device may be a PC computer, a tablet device, a personal digital assistant, a smartphone, a web application, or other devices capable of executing the set of instructions described above.

Here, the computing device does not have to be a single computing device, but may also be any collection of devices or circuits capable of executing the above instructions (or set of instructions) individually or in combination. The computing device may also be part of an integrated control system or system manager, or may be configured to interface with a portable electronic device locally or remotely (e.g., via wireless transmission).

In the computing device, the processor may include a central processing unit (CPU), a graphics processing unit (GPU), a programmable logic device, a dedicated processor system, a microcontroller, or a microprocessor. By way of example and not limitation, the processor may also include an analog processor, a digital processor, a microprocessor, a multicore processor, a processor array, a network processor, and the like.

Certain operations described in the method for processing a data table and the method for automatically training a machine learning model according to the exemplary embodiments of the present disclosure may be implemented in a software manner, certain operations may be implemented in a hardware manner, and in addition, these operations may be implemented in a combination of software and hardware.

The processor may run instructions or code stored in one of storage components, wherein the storage components may also store data. The instructions and data may also be sent and received over a network via a network interface device, wherein the network interface device may employ any known transmission protocol.

The storage component may be integrated with the processor, for example, by arranging RAM or flash memory within an integrated circuit microprocessor, etc. In addition, the storage component may include a separate device, for example, an external disk drive, a storage array, or any other storage device that may be used by a database system. The storage component and the processor may be operationally coupled or may communicate with each other, for example, via I/O ports, network connections, etc., such that the processor may read files stored in the storage component.

In addition, the computing device may also include a video display (e.g., LCD) and a user interaction interface (e.g., keyboard, mouse, touch input device, etc.). All components of the computing device may be connected to each other via a bus and/or network.

The operations involved in the methods for processing a data table and for automatically training a machine learning model according to the exemplary embodiments of the present disclosure may be described as various interconnected or coupled functional blocks or functional schematics. However, these functional blocks or functional schematics may be equally integrated into individual logical devices or operate according to non-exact boundaries.

For example, as described above, a computing device for processing a data table according to an exemplary embodiment of the present disclosure may include a storage component and a processor, wherein a collection of computer-executable instructions is stored in the storage component, and when the collection of computer-executable instructions is executed by the processor, the following steps are performed, including: acquiring table relationship configuration information about a plurality of data tables, wherein the table relationship configuration information includes an association relationship between every two data tables; stitching the plurality of data tables into a basic sample table based on the table relationship configuration information; generating a derived feature about a field in the basic sample table based on the field, and incorporating the generated derived feature into the basic sample table to form a sample table including a plurality of machine learning samples.

For example, as described above, a computing device for automatically training a machine learning model according to an exemplary embodiment of the present disclosure may include a storage component and a processor, wherein a collection of computer-executable instructions is stored in the storage component, and when the collection of computer-executable instructions is executed by the processor, the following steps are performed, including: acquiring table relationship configuration information about a plurality of data tables, wherein the table relationship configuration information includes an association relationship between every two data tables; stitching the plurality of data tables into a basic sample table based on the table relationship configuration information; generating a derived feature about a field in the basic sample table based on the field, and incorporating the generated derived feature into the basic sample table to form a sample table including a plurality of machine learning samples; training machine learning models using different machine learning algorithms and different hyperparameters, respectively, based on the sample table; determining a machine learning model with the best effect from the trained machine learning models, as a final trained machine learning model.

According to an exemplary embodiment of the present disclosure, there is provided an electronic device including: at least one processor; at least one memory storing computer-executable instructions, wherein the computer-executable instructions, when run by the at least one processor, cause the at least one processor to perform a method of processing a data table as described in the above exemplary embodiments or a method of automatically training a machine learning model as described in the above exemplary embodiments.

The foregoing describes various exemplary embodiments of the present disclosure, and it should be understood that the foregoing description is exemplary and not exhaustive, and that the present disclosure is not limited to the various exemplary embodiments disclosed. Many modifications and changes will be apparent to a person of ordinary skill in the art without departing from the scope and spirit of the present disclosure. Therefore, the protection scope of the present disclosure should be limited by the scope of the claims.

### Industrial Practicability

According to the methods and systems for processing a data table of the exemplary embodiments of the present disclosure, the user only needs to establish an association relationship between any two data tables to obtain a sample table including more comprehensive and valuable feature information that is obtained by stitching a plurality of data tables. It is easy, intuitive, and understandable for the user, thus enabling a user with no experience in feature engineering to construct a sample table that work well for training a machine learning model. This improves the processing efficiency and lowers the threshold of using feature engineering, and also facilitates extracting effective features to form machine learning samples to improve effects of a machine learning model.

In addition, according to the methods and systems for automatically training a machine learning model of the exemplary embodiments of the present disclosure, the user only needs to perform an easy-to-operate, intuitive and easy-to-understand input operation for establishing an association relationship between any two data tables to train a machine learning model that meets the requirements, so that business personnel who do not have professional abilities related to machine learning can also complete the modeling work independently, which greatly reduces the threshold of machine learning and also frees the modeling engineer from learning about the business of the target domain to devote to more specialized production work. The machine learning model may be automatically trained to meet the requirements, which greatly reduces the threshold of machine learning, and furthermore, the effects of the corresponding machine learning model may be further improved since the obtained machine learning samples include effective feature information.

## Claims

1. A system comprising at least one computing device and at least one storage device storing instructions, wherein the instructions, when run by the at least one computing device, cause the at least one computing device to perform steps of a method for processing a data table, comprising:
acquiring table relationship configuration information about a plurality of data tables, wherein the table relationship configuration information comprises an association relationship between every two data tables;
stitching the plurality of data tables into a basic sample table based on the table relationship configuration information;
generating a derived feature about a field in the basic sample table based on the field, and incorporating the generated derived feature into the basic sample table to form a sample table comprising a plurality of machine learning samples.

2. The system according to claim 1, wherein the stitching the plurality of data tables into the basic sample table comprises:
stitching a field in a data table other than a specified data table to the specified data table to form the basic sample table in a stitching order that a field in one of two data tables having the association relationship is stitched to the other data table based on an association field until to the specified data table.

3. The system according to claim 2, wherein the stitching the field in the data table other than the specified data table to the specified data table to form the basic sample table in the stitching order comprises:
stitching the field in the data table other than the specified data table to the specified data table in the stitching order after various aggregation processes are separately performed on the field or directly;
for each field that is stitched to the specified data table after the various aggregation processes are separately performed on the field, selecting an aggregated field with lower feature importance from various aggregated fields obtained by separately performing the various aggregation processes on the field and stitched to the specified data table;
deleting the selected aggregated field from the stitched specified data table to obtain the basic sample table.

4. The system according to claim 3, wherein in the step of stitching the field in the data table other than the specified data table to the specified data table in the stitching order after the various aggregation processes are separately performed on the field or directly,
when a field in any data table other than the specified data table can be stitched directly from a data table where the field is initially located to the specified data table in the stitching order without the aggregation processes, stitching the field of the data table directly from the data table where the field is initially located to the specified data table in the stitching order;
when a field in any data table other than the specified data table can only be stitched from a data table where the field is initially located to the specified data table in the stitching order after the aggregation processes are performed on the field, in the process of stitching the field from the data table where the field is initially located to the specified data table in the stitching order, whenever the aggregation processes are required to stitch the field of the data table or an aggregated field of the field of the data table to a next data table, stitching various aggregated fields obtained after the various aggregation processes are separately performed on the field of the data table or the aggregated field of the field of the data table to the next data table;
wherein the various aggregation processes comprise various temporal aggregation processes based on various time windows and/or various non-temporal aggregation processes.

5. The system according to claim 3 or 4, wherein the stitching the field in the data table other than the specified data table to the specified data table in the stitching order after the various aggregation processes are separately performed on the field or directly comprises:
for each field other than an association field with a data table to which the field is to be stitched in each data table other than the specified data table, generating a stitch path for stitching the field to the specified data table in the stitching order after the various aggregation processes are separately performed on the field or directly;
for the each field, stitching the field to the specified data table according to the stitching path of the field after the various aggregation processes are separately performed on the field or directly.

6. The system according to claim 3, wherein the selecting the aggregated field with lower feature importance from the various aggregated fields obtained by separately performing the various aggregation processes on the field and stitched to the specified data table comprises:
for each of the various aggregated fields obtained by separately performing the various aggregation processes on the field and stitched to the specified data table, training a corresponding machine learning model based on an unaggregated field in the stitched specified data table and the aggregated field;
selecting, from the various aggregated fields obtained by separately performing the various aggregation processes on the field and stitched to the specified data table, an aggregated field with a bad effect of the corresponding machine learning model as the aggregated field of lower feature importance.

7. The system according to claim 2, wherein the table relationship configuration information further comprises a maximum number of stitches,
wherein the stitching the field in the data table other than the specified data table to the specified data table to form the basic sample table in the stitching order comprises:
determining whether there exists among the plurality of data tables a data table whose final stitching to the specified data table in the stitching order requires a number of stitches exceeding the maximum number of stitches;
when it is determined that the data table exists, stitching fields in data tables other than the specified data table and the determined data table among the plurality of data tables to the specified data table in the stitching order to form the basic sample table;
when it is determined that the data table does not exists, stitching fields in data tables other than the specified data table among the plurality of data tables to the specified data table in the stitching order to form the basic sample table.

8. The system according to claim 1, wherein the generating the derived feature about the field in the basic sample table based on the field, and incorporating the generated derived feature into the basic sample table comprises:
(a) performing the ith round of derivation on features in a current feature search space and selecting derived features of higher feature importance from derived features generated in the ith round, wherein an initial value of i is 1 and an initial value of the feature search space is a first predetermined number of fields with the highest feature importance in the basic sample table;
(b) when i is less than a predetermined threshold, updating the feature search space to the first predetermined number of fields with the highest feature importance in the basic sample table other than those that have been used as the feature search space, letting i=i+1, and returning to perform step (a);
(c) when i is greater than or equal to the predetermined threshold, incorporating derived features selected from the first i rounds into the basic sample table.

9. The system according to claim 8, wherein the performing the ith round of derivation on the features in the current feature search space comprises:
separately performing various nth-order processes on every n features in the current feature search space to generate various nth-order derived features;
wherein n takes at least one integer greater than 0; and the nth-order process is a process performed on at least one of n features based on the n features.

10. The system according to claim 8, wherein the performing the ith round of derivation on the features in the current feature search space comprises:
generating various first-order derived features by separately performing various first-order processes on each of features in the current feature search space; and/or
generating various second-order derived feature by separately performing various second-order processes on every two features in the current feature search space; and/or
generating various third-order derived feature by separately performing various third-order processes on every three features in the current feature search space,
wherein the first-order process is a process performed on a single feature only;
the second-order process is a process performed on at least one of two features based on the two features;
the third-order process is a process performed on at least one of three features based on the three features.

11. The system according to claim 8, wherein the selecting the derived feature of higher feature importance from the derived features generated in the ith round comprises:
for each of the derived features generated in the ith round, training a corresponding machine learning model based on the features in the current feature search space and the derived feature;
selecting, from the derived features generated in the ith round, derived features for which effects of the corresponding machine learning model satisfy a predetermined condition.

12. The system according to claim 4, wherein the temporal aggregation processes comprises at least one of summing, averaging, taking a maximum value, taking a minimum value, calculating a number of different field values, calculating a number of field values, calculating a variance, calculating a mean square error, taking a predetermined number of field values with the highest frequency, taking a last field value, taking a last non-null field value;
the non-temporal aggregation processes comprises at least one of summing, averaging, taking a maximum value, taking a minimum value, calculating a number of different field values, calculating a number of field values, calculating a variance, calculating mean square error, and taking a predetermined number of field values with the highest frequency.

13. The system according to claim 1, wherein the acquiring the table relationship configuration information about the plurality of data tables comprises:
acquiring the table relationship configuration information about the plurality of data tables, based on an input operation performed by a user in a screen,
wherein the input operation comprises an input operation for specifying that every two data tables have the association relationship.

14. The system according to any one of claims 1 to 13, wherein the instructions, when run by the at least one computing device, cause the at least one computing device to further perform steps of automatically training a machine learning model, comprising:
training machine learning models using different machine learning algorithms and different hyperparameters, respectively, based on the sample table;
determining a machine learning model with the best effect from the trained machine learning models, as a final trained machine learning model.

15. A method for processing a data table, comprising:
acquiring table relationship configuration information about a plurality of data tables, wherein the table relationship configuration information comprises an association relationship between every two data tables;
stitching the plurality of data tables into a basic sample table based on the table relationship configuration information;
generating a derived feature about a field in the basic sample table based on the field, and incorporating the generated derived feature into the basic sample table to form a sample table comprising a plurality of machine learning samples.

16. The method according to claim 15, wherein the stitching the plurality of data tables into the basic sample table comprises:
stitching a field in a data table other than a specified data table to the specified data table to form the basic sample table in a stitching order that a field in one of two data tables having the association relationship is stitched to the other data table based on an association field until to the specified data table.

17. The method according to claim 16, wherein the stitching the field in the data table other than the specified data table to the specified data table to form the basic sample table in the stitching order comprises:
stitching the field in the data table other than the specified data table to the specified data table in the stitching order after various aggregation processes are separately performed on the field or directly;
for each field that is stitched to the specified data table after the various aggregation processes are separately performed on the field, selecting an aggregated field with lower feature importance from various aggregated fields obtained by separately performing the various aggregation processes on the field and stitched to the specified data table;
deleting the selected aggregated field from the stitched specified data table to obtain the basic sample table.

18. The method according to claim 17, wherein in the step of stitching the field in the data table other than the specified data table to the specified data table in the stitching order after the various aggregation processes are separately performed on the field or directly,
when a field in any data table other than the specified data table can be stitched directly from a data table where the field is initially located to the specified data table in the stitching order without the aggregation processes, stitching the field of the data table directly from the data table where the field is initially located to the specified data table in the stitching order;
when a field in any data table other than the specified data table can only be stitched from a data table where the field is initially located to the specified data table in the stitching order after the aggregation processes are performed on the field, in the process of stitching the field from the data table where the field is initially located to the specified data table in the stitching order, whenever the aggregation processes are required to stitch the field of the data table or an aggregated field of the field of the data table to a next data table, stitching various aggregated fields obtained after the various aggregation processes are separately performed on the field of the data table or the aggregated field of the field of the data table to the next data table;
wherein the various aggregation processes comprise various temporal aggregation processes based on various time windows and/or various non-temporal aggregation processes.

19. The method according to claim 17 or 18, wherein the stitching the field in the data table other than the specified data table to the specified data table in the stitching order after the various aggregation processes are separately performed on the field or directly comprises:
for each field other than an association field with a data table to which the field is to be stitched in each data table other than the specified data table, generating a stitch path for stitching the field to the specified data table in the stitching order after the various aggregation processes are separately performed on the field or directly;
for the each field, stitching the field to the specified data table according to the stitching path of the field after the various aggregation processes are separately performed on the field or directly.

20. The method according to claim 17, wherein the selecting the aggregated field with lower feature importance from the various aggregated fields obtained by separately performing the various aggregation processes on the field and stitched to the specified data table comprises:
for each of the various aggregated fields obtained by separately performing the various aggregation processes on the field and stitched to the specified data table, training a corresponding machine learning model based on an unaggregated field in the stitched specified data table and the aggregated field;
selecting, from the various aggregated fields obtained by separately performing the various aggregation processes on the field and stitched to the specified data table, an aggregated field with a bad effect of the corresponding machine learning model as the aggregated field of lower feature importance.

21. The method according to claim 16, wherein the table relationship configuration information further comprises a maximum number of stitches,
wherein the stitching the field in the data table other than the specified data table to the specified data table to form the basic sample table in the stitching order comprises:
determining whether there exists among the plurality of data tables a data table whose final stitching to the specified data table in the stitching order requires a number of stitches exceeding the maximum number of stitches;
when it is determined that the data table exists, stitching fields in data tables other than the specified data table and the determined data table among the plurality of data tables to the specified data table in the stitching order to form the basic sample table;
when it is determined that the data table does not exists, stitching fields in data tables other than the specified data table among the plurality of data tables to the specified data table in the stitching order to form the basic sample table.

22. The method according to claim 15, wherein the generating the derived feature about the field in the basic sample table based on the field, and incorporating the generated derived feature into the basic sample table comprises:
(a) performing the ith round of derivation on features in a current feature search space and selecting derived features of higher feature importance from derived features generated in the ith round, wherein an initial value of i is 1 and an initial value of the feature search space is a first predetermined number of fields with the highest feature importance in the basic sample table;
(b) when i is less than a predetermined threshold, updating the feature search space to the first predetermined number of fields with the highest feature importance in the basic sample table other than those that have been used as the feature search space, letting i=i+1, and returning to perform step (a);
(c) when i is greater than or equal to the predetermined threshold, incorporating derived features selected from the first i rounds into the basic sample table.

23. The method according to claim 22, wherein the performing the ith round of derivation on the features in the current feature search space comprises:
separately performing various nth-order processes on every n features in the current feature search space to generate various nth-order derived features;
wherein n takes at least one integer greater than 0; and the nth-order process is a process performed on at least one of n features based on the n features.

24. The method according to claim 22, wherein the performing the ith round of derivation on the features in the current feature search space comprises:
generating various first-order derived features by separately performing various first-order processes on each of features in the current feature search space; and/or
generating various second-order derived feature by separately performing various second-order processes on every two features in the current feature search space; and/or
generating various third-order derived feature by separately performing various third-order processes on every three features in the current feature search space,
wherein the first-order process is a process performed on a single feature only;
the second-order process is a process performed on at least one of two features based on the two features;
the third-order process is a process performed on at least one of three features based on the three features.

25. The method according to claim 22, wherein the selecting the derived feature of higher feature importance from the derived features generated in the ith round comprises:
for each of the derived features generated in the ith round, training a corresponding machine learning model based on the features in the current feature search space and the derived feature;
selecting, from the derived features generated in the ith round, derived features for which effects of the corresponding machine learning model satisfy a predetermined condition.

26. The method according to claim 18, wherein the temporal aggregation processes comprises at least one of summing, averaging, taking a maximum value, taking a minimum value, calculating a number of different field values, calculating a number of field values, calculating a variance, calculating a mean square error, taking a predetermined number of field values with the highest frequency, taking a last field value, taking a last non-null field value;
the non-temporal aggregation processes comprises at least one of summing, averaging, taking a maximum value, taking a minimum value, calculating a number of different field values, calculating a number of field values, calculating a variance, calculating mean square error, and taking a predetermined number of field values with the highest frequency.

27. The method according to claim 15, wherein the acquiring the table relationship configuration information about the plurality of data tables comprises:
acquiring the table relationship configuration information about the plurality of data tables, based on an input operation performed by a user in a screen,
wherein the input operation comprises an input operation for specifying that every two data tables have the association relationship.

28. A method of automatically training a machine learning model, comprising:
obtaining a sample table comprising a plurality of machine learning samples by performing steps of a method according to any one of claims 15-27;
training machine learning models using different machine learning algorithms and different hyperparameters, respectively, based on the sample table;
determining a machine learning model with the best effect from the trained machine learning models, as a final trained machine learning model.

29. A system for processing a data table, comprising:
a configuration information acquisition device adapted to acquire table relationship configuration information about a plurality of data tables, wherein the table relationship configuration information comprises an association relationship between every two data tables;
a stitching device adapted to stitch the plurality of data tables into a basic sample table based on the table relationship configuration information;
a sample table generation device adapted to generate a derived feature about a field in the basic sample table based on the field, and incorporate the generated derived feature into the basic sample table to form a sample table comprising a plurality of machine learning samples.

30. A system of automatically training a machine learning model, comprising:
a system for processing a data table according to claim 29;
a training device adapted to train machine learning models using different machine learning algorithms and different hyperparameters, respectively, based on a sample table comprising a plurality of machine learning samples obtained by the system for processing a data table;
a determining device adapted to determine a machine learning model with the best effect from the trained machine learning models, as a final trained machine learning model.

31. A computer readable storage medium storing instructions, wherein the instructions, when executed by at least one computing device, cause the at least one computing device to perform a method for processing a data table according to any one of claims 15 to 27 or a method of automatically training a machine learning model according to claim 28.

32. An electronic apparatus, comprising:
at least one processor;
at least one memory storing computer executable instructions;
wherein the computer executable instructions, when executed by at least one processor, cause the at least one processor to perform a method for processing a data table according to any one of claims 15 to 27 or a method of automatically training a machine learning model according to claim 28.
